# EUROPEAN PATENT APPLICATION

(11) **EP 0 919 492 A1**
(43) Date of publication of application: **02.06.1999**
(21) Application number: 97203694.1
(22) Date of filing: 26.11.1997
(51) Int. Cl.: B65G 1/00, B65G 47/244, B65G 29/00, A01G 9/10

(54) **Apparatus for rotating objects to be inspected by a vision system**

(71) Applicant: Visser 's-Gravendeel Holding B.V., NL-3295 XB 's-Gravendeel (NL)
(72) Inventor: Visser, Anthony, 3295 RN 's-Gravendeel (NL)
(74) Representative: Eveleens Maarse, Pieter

(57) **Abstract**

The invention relates to a rotation apparatus for rotating supplied objects, for instance pot plants, comprising: transporting means for moving the objects in a first direction; engaging means for braking engagement on the object on only one side of the object so that the object performs a rotating movement superimposed onto the movement in the first direction; supply means for placing the objects for rotating onto the transporting device; and outfeed means for removing and discharging the rotated objects from the transporting device.

The engaging means preferably comprise a rail which extends into the path traversed by the object and which comprises a layer on its side facing the object which enhances the friction with the object.

According to another preferred embodiment the transporting means comprise a disc drivable in rotation which has a radius such that the objects can execute a movement with a component in the radial direction, and the rail extends in accordance with a chord over the disc.

## Description

The present invention relates to a rotation apparatus for rotating supplied objects, for instance pot plants.

Such an apparatus is known in the form of a conveyor belt on which the objects for rotating are supplied and wherein rubber belts tensioned on pulleys are arranged on either side of the conveyor belt, wherein the pulleys are movable toward the conveyor belt for engaging the objects for rotating simultaneously on both sides and wherein the belts are drivable for driving the pot in opposing directions on either side, whereupon this pot is rotated.

The conveyor belt on which the object for rotating is supplied must herein be stopped during the rotation. This means that such an apparatus is discontinuous, so that the capacity of such an apparatus is limited.

Another drawback of this apparatus of the prior art is that this apparatus contains many movable parts, so that the apparatus can easily malfunction and become fouled. Such an apparatus is moreover costly.

The object of the present invention is to provide such an apparatus, wherein the above stated drawbacks are avoided.

This object is achieved in that the rotation apparatus for rotating objects, for instance pot plants, is provided with:
- transporting means for moving the objects in a first direction;
- engaging means for braking engagement on the object on only one side of the object so that the object performs a rotating movement superimposed onto the movement in the first direction; and
- supply means for placing the objects for rotating onto the transporting device; and
- outfeed means for removing and discharging the rotated objects from the transporting device.

Such an apparatus has a much smaller number of moving parts, so that it breaks down less quickly and can be manufactured at lower cost.

Such an apparatus can further operate continuously, whereby the capacity is much greater than the discontinuously operating apparatus of the prior art.

According to a preferred embodiment the transporting means comprise a disc drivable in rotation which has a radius such that the objects can execute a movement with a component in the radial direction, wherein the engaging means are formed by a rail extending in accordance with a chord over the disc. This results in a particularly attractive and simple embodiment.

According to yet another preferred embodiment the feed means are adapted to dose the objects for rotating.

A type of buffer is herein created so that when the supply of objects for rotation is temporarily too great a dosing function comes into operation, so that only a single object is rotated at a time. Thus is ensured that when a vision system is used, only one object is rotated at a time, whereby the recordings to be made by the video system are of good quality.

Other attractive preferred embodiments are stated in the remaining sub-claims.

The present invention will be elucidated hereinbelow with reference to the annexed figures, in which:
figure 1 shows a partly broken away perspective view of a preferred embodiment of the present invention;
figure 2 shows a schematic top view of the embodiment depicted in figure 1;
figure 3 shows a schematic top view of a variant of the embodiment depicted in figures 1 and 2; and
figure 4 shows a top view of another embodiment of the apparatus according to the invention.

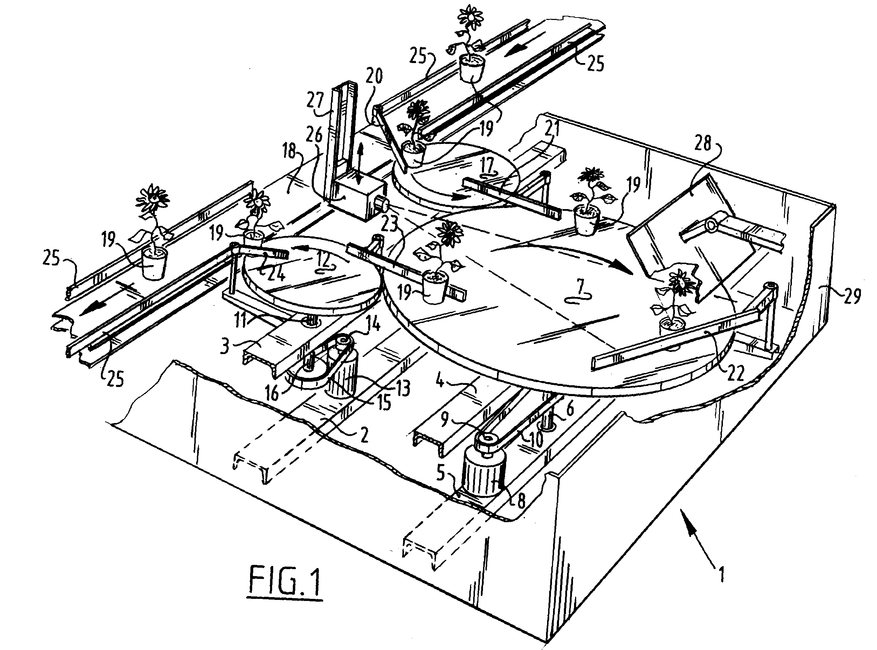

Shown in figure 1 is a rotation apparatus which is used for instance for a so-called vision system. Vision systems are being applied increasingly in recent times to assess the quality and characteristics of products with diverse properties which quite often vary, such as natural products.

An example thereof is for instance the evaluation of the quality of pot plants. An image of a natural product, for instance a pot plant, is herein made by means of a camera, for instance a video camera, and the thus obtained image or thus obtained images are processed electronically in order to obtain a quality designation. This may consist of appraisal of the symmetry, colour, ratio of surfaces in various colours and so on.

The product in question can be classified and sorted on the basis of such an assessment.

In order to obtain reliable information concerning the characteristics of such an object, it is often necessary to inspect the object from more than one side. It is of particular importance to inspect an object from more than two sides in order to be able to have available complete information about such a product. It has been proposed for this purpose to rotate such products by means of belts, as already described in the preamble to the present text.

The rotation apparatus shown in figure 1 is constructed for such a purpose. The rotation apparatus shown in figure 1 is formed by a frame 1, only horizontal elements 2,3,4,5 of which are shown. Mounted in two of these horizontal frame elements is a vertical shaft 6 to which is fixed a disc 7 manufactured for instance from wood. Disc 7 is drivable in rotation by means of an electric motor 8 likewise mounted on horizontal frame element 5 and a pulley 9 which is mounted on the output shaft of the motor and round which a belt 10 is trained which is also trained on the other side round a pulley (not shown in the drawing) arranged on shaft 6.

Further mounted on two horizontal frame elements 2 and 3 is a vertical shaft 11 to which is fixed a rotatable outfeed disc 12. This disc 7 is also drivable in rotation by means of an electric motor 13, a pulley 14 mounted on its output shaft, a belt 15 and a pulley 16 arranged on vertical shaft 11. Arranged in similar manner is a feed disc 17 which is fixed onto a vertical shaft not shown in the drawings which is likewise mounted in horizontal frame elements 2 and 3 and which can be driven separately by an electric motor.

Each of the three discs is placed such that the large disc contacts or almost contacts feed disc 17 and outfeed disc 12. A conveyor belt 18 is further arranged which extends in horizontal direction and which is placed such that it contacts or almost contacts feed disc 17 and outfeed disc 12. In addition, the upper side of conveyor belt 18 and that of discs 7,12 and 17 lie in the same plane.

For guiding of the objects for sorting, in the present case pot plants 19, use is made of a first guide rail 20 which extends at an angle over conveyor belt 18 and which guides pot plants 19 supplied on conveyor belt 18 onto the feed disc 17. A second guide rail 21 is further arranged which extends at least partially over the feed disc and which is positioned to guide the pot plants from feed disc 17 toward disc 7.

On disc 7 is arranged a friction rail 22 for causing rotation of the pot plants 19. A third guide rail 23 is further arranged which extends over disc 7 to guide pot plants 19 from disc 7 onto outfeed disc 12. Finally, a fourth guide rail 24 is arranged for guiding pot plants 19 from outfeed disc 12 onto conveyor belt 18.

All guide rails and the friction rail are connected to the frame by means of adjustable rods so that the position of the rails can be adapted.

In the present case rails 25 are arranged on either side of conveyor belt 18 to prevent pot plants falling off the conveyor belt. This is however of lesser importance for the invention.

For monitoring of the rotating objects use is made of a video camera 26 which can be mounted in diverse vertical positions on a vertically extending support 27. Support 27 is in turn fixed to the frame. Video camera 26 is herein adjusted such that it displays a good image of the object subjected to rotation, in the present case a pot plant 19.

Further arranged in tilted position above the pot plant is a mirror 28 which ensures that when camera 26 is situated in a high position it receives the image of the top part of pot plant 19.

The camera is usually adapted to make a continuous image of the rotating pot plant, although it is equally possible for the camera to be adapted to make a limited number, for instance three, four or five, of images of the rotating plant which are fed to a computer for analysis therein.

It is often attractive herein for an image of the top part of the plant to be available.

A housing 29 is further arranged around the whole apparatus.

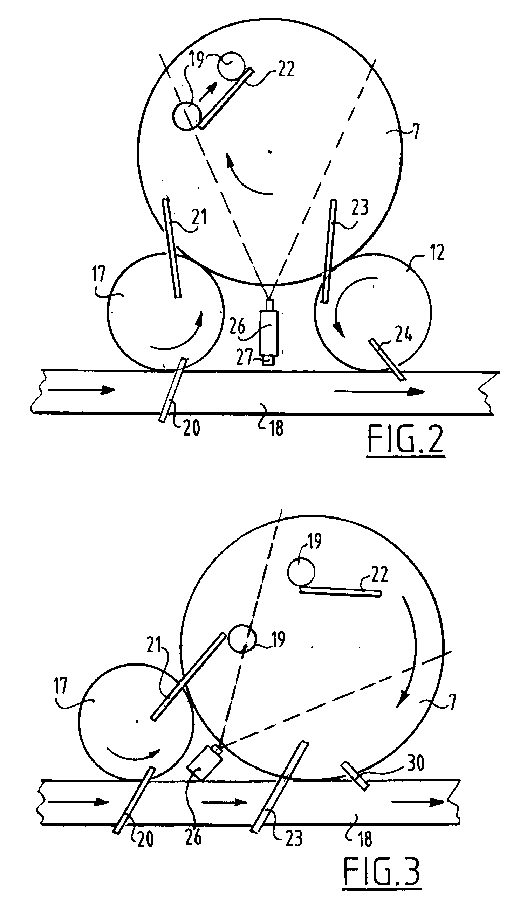

The operation will now he elucidated with reference to figure 2, which is a top view of the apparatus shown in figure 1.

A pot plant 19 is initially supplied on conveyor belt 18, placed via guide rail 20 onto feed disc 17 and subsequently placed onto disc 7 by means of guide rail 21. It is pointed out herein that using the control of the rotation speed of feed disc 17 it is possible to regulate the feed rate of pot plants or other objects to be subjected to rotation.

Pot plant 19 then co-rotates a distance with the disc 7 until it arrives against the edge of friction rail 22. It is noted here that in the present embodiment guide rail 22 is placed from the inside to the outside, in contrast to the embodiment shown in figure 1, wherein the guide rail is placed from the outside to the inside. As a result of the fact that the pure rotation movement of pot plant 19 is interrupted it will move along guide rail 22, wherein due to the considerable friction between the sides of guide rail 22 and the relevant side of pot plant 19 a rotation of pot plant 19 occurs.

It is possible through dimensioning of guide rail 22 to cause sufficient rotation of the pot plant, for instance though 180°, 240° or through another angle, this being determined by the wishes relating to the visual recording device.

Pot plant 19 is then released from guide rail 22, continues its rotation movement, albeit in a larger radius, and is subsequently placed by means of guide rail 23 onto outfeed disc 12 and is placed once again onto conveyor belt 18 by means of the fourth guide rail 24.

It will be apparent that it is possible to omit the outfeed disc 12. The thus created situation is shown in figure 3.

It is finally pointed out that it is possible to make use of a separate conveyor belt instead of a disc 7 in order to subject the objects for inspection to a movement. Use is further made herein of an additional guide rail 30 in respect of the sharp change in direction of the pot plant at the transfer from disc 7 onto conveyor belt 18.

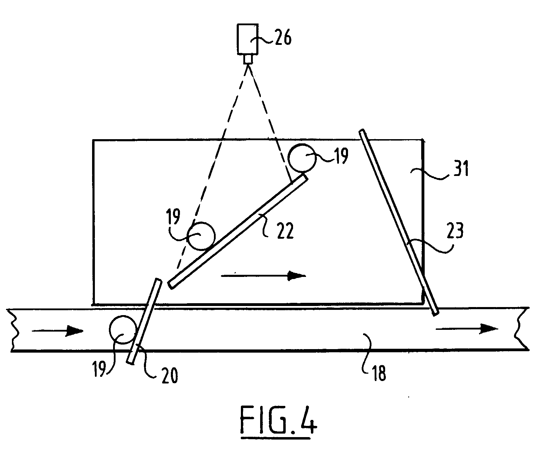

In the embodiment shown in figure 4, use is made of a conveyor belt 31 with a considerably greater width than the original conveyor belt 18. The transporting direction of both conveyor belts is herein identical. It is also possible during the linear movement of conveyor belt 31 to subject the pot plants 19 to a forced movement, wherein they are guided along the friction rail 22 and there undergo a rotation. The pot plants are then carried directly onto the conveyor belt by means of the fourth guide rail 23.

It will be apparent that diverse modifications can be carried out on the above shown construction without deviating from the invention.

## Claims

1. Rotation apparatus for rotating supplied objects, for instance pot plants, **characterized by:**
- transporting means for moving the objects in a first direction;
- engaging means for braking engagement on the object on only one side of the object so that the object performs a rotating movement superimposed onto the movement in the first direction; and
- supply means for placing the objects for rotating onto the transporting device; and
- outfeed means for removing and discharging the rotated objects from the transporting device.

2. Apparatus as claimed in claim 1, **characterized in that** the engaging means comprise a rail which extends into the path traversed by the object and which comprises a layer on its side facing the object which enhances the friction with the object.

3. Apparatus as claimed in claim 2, **characterized in that** the transporting means comprise a conveyor belt with a width such that the object can execute a movement with a component in the direction transversely of the direction of movement of the conveyor belt, and the rail extends at an angle over the conveyor belt.

4. Apparatus as claimed in claim 2, **characterized in that** the transporting means comprise a disc drivable in rotation which has a radius such that the objects can execute a movement with a component in the radial direction, and the rail extends in accordance with a chord over the disc.

5. Apparatus as claimed in any of the foregoing claims, **characterized in that** the supply means are adapted to dose the objects for rotating.

6. Apparatus as claimed in claim 4, **characterized in that** the supply means comprise a second disc drivable in rotation which is provided with a second rail for urging the object for rotating onto the first disc.

7. Apparatus as claimed in claims 5 and 6, **characterized in that** the rotation speed of the second disc can be changed.

8. Apparatus as claimed in claim 4, 5, 6 or 7, **characterized in that** the outfeed means comprise a third rotatable disc which is provided with a third rail for moving the rotated objects from the first disc onto the second disc.

9. Apparatus as claimed in any of the foregoing claims, **characterized in that** the apparatus comprises at least one camera for recording an image of the objects during at least two rotation positions of the objects.

10. Apparatus as claimed in claim 9, **characterized in that** the apparatus comprises a second camera for making at least one image of the top part of the object.

11. Apparatus as claimed in claim 10, **characterized in that** the second camera is placed above the first camera and that a mirror placed in tilted position is arranged above the first rotatable disc.
